# EUROPEAN PATENT APPLICATION

(11) **EP 4 760 064 A1**
(43) Date of publication of application: **17.06.2026**
(21) Application number: 25222497.7
(22) Date of filing: 11.12.2025
(51) Int. Cl.: F01D 25/00, F01D 25/18, F01D 25/34

(54) **SYSTEM AND METHOD FOR REDUCING WEAR IN AN ACCESSORY GEARBOX DURING A WASH EVENT OF A GAS TURBINE ENGINE**

(30) Priority: 13.12.2024 IN 202411098690; 03.07.2025 US 202519258999
(71) Applicant: General Electric Company, Cincinnati, Ohio 45215 (US)
(72) Inventor: GANIGER, Ravindra Shankar, 560066 Bengaluru (IN); PETKAR, Kirti Arvind, 560066 Bengaluru (IN); RAMADURAI, Krishna, 560066 Bengaluru (IN)
(74) Representative: Openshaw & Co.

(57) **Abstract**

A system (200) for reducing wear during a wash of a gas turbine engine (10), the system comprising:
an accessory gearbox (45);
a transfer gearbox (46) drivingly and fluidly coupled to the accessory gearbox (45); and
a lubrication system (100) fluidly coupled to the accessory gearbox (45) and the transfer gearbox (46), the lubrication system (100) comprising:
a lubricant reservoir (102);
a supply circuit (106) to supply lubricant (104) from the lubricant reservoir (102) to the accessory gearbox (45) and the transfer gearbox (46);
a return circuit (108) to return lubricant (104) from the accessory gearbox (45) and the transfer gearbox (46) to the lubricant reservoir (102); and
a wash system connector (101) coupled to a wash system (80) and fluidly coupled to the supply circuit (106) upstream of the accessory gearbox (45) and the transfer gearbox (46), the wash system connector (101) configured to supply a mixture of air and lubricant from the wash system (80) to the accessory gearbox (45) and the transfer gearbox (46).

## Description

### FIELD

The present disclosure relates to a system and method for preventing wear in one or more gearboxes of a gas turbine engine during a wash event.

### CROSS-REFERENCE TO RELATED APPLIATION(S)

This application claims priority to Indian Provisional Application No. 202411098690 filed December 13, 2024, and to U.S. Utility Application No. 19/258,999 filed July 3, 2025, which are incorporated herein by reference in their entirety.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gasses through the turbine section drives the turbine section and is then routed through the exhaust section, e.g., to atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic and/or thermal properties of the engine and reducing engine performance.

In order to remove such foreign particles from within the gas path of the gas turbine engine, a cleaning operation can be performed by directing water or other fluids towards an inlet of the gas turbine engine, while the core engine is cranked using, e.g., using a starter motor. However, such cleaning operations are often not tailored to the type of cleaning actually needed in a particular portion of the engine. For example, depending on the prior operating conditions of the gas turbine engine, a quick and simple water wash may be needed. In other situations, a long wash cycle with a wash foam having particular foam characteristics may be needed to properly clean the engine and return it to peak efficiency.

In all the above engine wash situations, the engine is offline for the duration of the wash. As a consequence, the lubricant does not circulate through the various gearboxes of the gas turbine engine. This can result in excessive gear scuffing and gearbox wear. Accordingly, an improved lubrication system and method for reducing or preventing wear during a gas turbine wash is desired and would be beneficial in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 illustrates a cross-sectional view of a gas turbine engine in accordance with an exemplary aspect of the present disclosure.
FIG. 2 is a schematic diagram of a system for reducing or preventing wear during a wash cycle of a gas turbine engine in accordance with embodiments of the present disclosure.
FIG. 3 illustrates a cross-sectional view of an air/oil atomizer in accordance with exemplary aspects of the present disclosure.
FIG. 4 illustrates a cross-sectional view of an air/oil atomizer in accordance with exemplary aspects of the present disclosure.
FIG. 5 is a flow diagram of a method for reducing or preventing wear during a wash event of a gas turbine engine with a wash system in accordance with embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the term "line" may refer to fluid conveying component, such as a tube, pipe, hose, or other fluid conveying and/or carrying conduit.

The present disclosure is generally related to a system and method for reducing or preventing wear in one or more gearboxes of a gas turbine engine during a wash event. During the wash of the gas turbine engine, the shafts or spools of the gas turbine engine may be rotated at a slow speed (e.g., 50-150 RPM for several hours) by connecting an electric machine (e.g., a starter motor) to the accessory gearbox and/or the transfer gearbox while cleaning fluid is forced through the gas turbine engine (e.g., through the rotor blades, stator vanes, and various other components). Since the engine is offline during wash, there is no normal lubricant circulation as would be prevalent during normal operation of the gas turbine engine through the accessory gearbox and the transfer gearbox, which can result in gear scuffing and/or wear during the wash of the engine. For example, during normal operation, one or more supply pumps and one or more return pumps, which are drivingly connected to the accessory gearbox (and/or the transfer gearbox), may circulate lubricant throughout a lubrication system that is fluidly connected to the gearboxes. However, during the wash event, the supply pumps and/or return pumps may be operated at a slower speed than traditional operation, such that lubricant does not circulate at the same rate or in the same amount as it would during normal operation to the accessory gearbox and/or the transfer gearbox. That is, because the gearboxes are driven at a lower speed during the wash event (which can last several hours) to drive the shaft(s) of the gas turbine at a slow speed, thus driving the oil supply/return pumps at a slow speed, wear or gear scuffing can result in the gearboxes due to insufficient lubricant being provided. It will be understood by one skilled in the art that while the term "wash" is often used to describe a wet process involving a liquid or foam washing medium, in the context of the present invention it is intended to encompass all cleaning processes which require rotation of the gas turbine engine during the cleaning process including, without limitation, water wash, foam wash, abrasive media cleaning, dry ice (carbon dioxide) blasting, frozen liquid media cleaning exhibiting a phase change during the wash, laser ablative cleaning and the like.

The improved system and method reduces or prevents gear scuffing and/or wear within the accessory gearbox and the transfer gearbox by providing a mixture of air and oil to the accessory gearbox and the transfer gearbox during a wash event of the gas turbine engine. For example, the wash system includes an air compressor, a wash system lubricant supply, and an air/oil atomizer. The air/oil atomizer is fluidly couplable or connectable with a wash system connector of the lubrication system upstream of the gearboxes to provide a mixture of air and oil to the accessory gearbox and the transfer gearbox during a wash event of the gas turbine engine. This advantageously prevents wear and/or scuffing of the gears and other components in the gearboxes during the wash event. The system and method preserves the life of the gearboxes by providing sufficient lubricant to the gearboxes (e.g., in a mist or mixture) during a wash event (in which the gearboxes are driven for several hours). More specifically, by providing a mixture of air and oil to the accessory gearbox and the transfer gearbox during the wash event of the gas turbine engine (during which the gearboxes are driven), the life of the gearboxes is preserved because sufficient lubricant is provided which reduces gear scuffing and wear that may otherwise occur. This reduces maintenance burden of replacing components (e.g., gears) within the gearboxes because the life of the gearboxes is prolonged, thereby also reducing costs. The mixture of lubricant and compressed air (i.e., air/oil mist) is also beneficial for the low-speed operation of the gearboxes because it allows for sufficient lubricant to be provided to the gearboxes without requiring the lubricant to be pumped into the gearboxes (e.g., via one or more pumps, which would require additional power and/or resources).

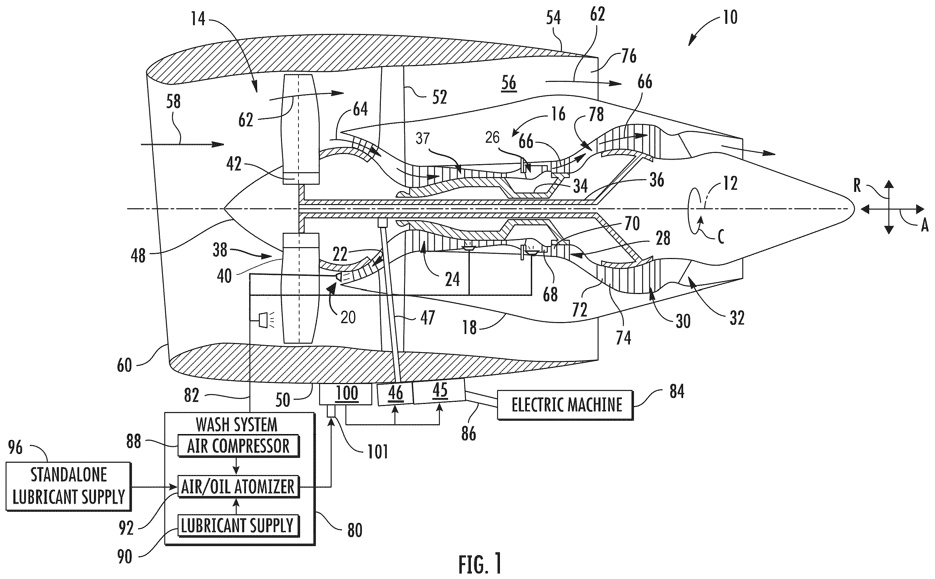

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. The compressor section, combustion section 26, and turbine section together define at least in part a core air flowpath of the turbofan engine 10. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a fan 38 having a plurality of fan blades 40 coupled to a disk 42 in a spaced apart manner. As is depicted, the fan blades 40 extend outwardly from disk 42 generally along the radial direction R. Each fan blade 40 is rotatable relative to the disk 42 about a pitch axis by virtue of the fan blades 40 being operatively coupled to a suitable pitch change mechanism configured to collectively vary the pitch of the fan blades 40, e.g., in unison. The disk 42 is covered by rotatable front hub 48 of the fan section 14 (sometimes also referred to as a "spinner"). The front hub 48 aerodynamically contoured to promote an airflow through the plurality of fan blades 40. The fan blades 40 and disk 42 are together rotatable about the longitudinal centerline 12 by LP shaft 36.

Referring still to the exemplary embodiment of FIG. 1, the exemplary fan section 14 includes an annular fan casing or outer nacelle 50 that circumferentially surrounds the fan 38 and/or at least a portion of the turbomachine 16. The nacelle 50 is supported relative to the turbomachine 16 by a plurality of circumferentially-spaced outlet guide vanes 52. Additionally, a downstream section 54 of the nacelle 50 extends over an outer portion of the turbomachine 16 so as to define a bypass airflow passage 56 therebetween.

During operation of the turbofan engine 10, a volume of air 58 enters the gas turbine engine 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary turbofan engine 10 depicted in FIG. 1 is by way of example only, and that in other exemplary embodiments, the turbofan engine 10 may have any other suitable configuration. For example, in other exemplary embodiments, the turbofan engine 10 may be configured as a geared turbofan engine (i.e., including a reduction gearbox); may not include variable-pitch fan blades; may include any other suitable number of spools, compressors, or turbines; etc. Additionally, the turbofan engine 10 may instead be configured as any other suitable aeronautical gas turbine engine, such as a turboshaft engine, turboprop engine, turbojet engine, etc. Additionally, still, the turbofan engine 10 may instead be configured as an aeroderivative gas turbine engine (e.g., for nautical applications), an industrial gas turbine engine, or as any other suitable gas turbine engine.

As is depicted, the exemplary turbofan engine 10 further includes an accessory gearbox 45 attached to the gas turbine engine and mechanically coupled to a spool of the gas turbine engine. The accessory gearbox 45 may be mounted outside the flowpaths of the gas turbine engine 10, e.g. coupled to the outer casing of the HP compressor 24, or to the nacelle 50 or any other stationary structure of the gas turbine engine 10. The accessory gearbox may provide power to one or more suitable accessory systems of the gas turbine engine 10 during at least certain operations.

More specifically, the accessory gearbox 45 may be attached to the turbomachine 16 of the turbofan engine 10, and is mechanically coupled to the LP spool 36 of the turbofan engine 10 through a transfer gearbox 46 and transfer shaft 47. The transfer shaft 47 may extend through an outlet guide vane 52. The transfer shaft 47 may be drivingly coupled to the LP shaft 36 and the transfer gearbox 46, such that the LP spool 36 is rotatable with the transfer shaft 47 (e.g., the transfer gearbox 46 and transfer shaft 47 may rotate the LP spool 36). An electric machine 84 (i.e., a starter motor/generator) may be coupled to the accessory gearbox 45 for, e.g., starting the turbofan engine 10 and/or generating electrical power once the turbofan engine 10 is running.

In exemplary embodiments, the gas turbine engine 10 may include a lubrication system 100 fluidly connected to the accessory gearbox 45 and the transfer gearbox 46. The lubrication system 100 may provide lubricant (e.g., oil) the accessory gearbox 45 and the transfer gearbox 46 during operation of the gas turbine engine 10. In this way, the accessory gearbox 45 is drivingly and fluidly coupled to the transfer gearbox 46.

Moreover, it will be appreciated that after prolonged use of the turbofan engine 10 of FIG. 1, deposits, foreign particles, and other sediments may become attached to or form on certain of the components within the core air flowpath 37 of the turbofan engine 10. Accordingly, it may be beneficial at certain intervals to wash the turbofan engine 10 to remove such deposits, foreign particles, and other sediments. As such, when the gas turbine engine 10 is shut off, a wash system 80 may be utilized and configured for washing, rinsing, or otherwise cleaning the gas turbine engine 10. The wash system 80 may be housed at least in part on or within modular and movable wash cart, which provides mobility of the wash system 80 and facilitates quick and easy cleaning of the gas turbine engine 10. The wash system 80 may include one or more wash line(s) 82, which may expel cleaning fluid into one or more sections and/or onto one or more components of the gas turbine engine 10 during shut down. For example, as shown in FIG. 1, at least one wash line 82 may provide cleaning fluid onto the fan blades 40; at least one wash line 82 may provide cleaning fluid into the annular inlet 20 of the core flowpath 37; at least one wash line 82 may provide cleaning fluid into (e.g., directly into) the HP compressor 24 (e.g., via one or more borescope holes); and at least one wash line 82 may provide cleaning fluid into (e.g., directly into) the combustion section 26 (e.g., via one or more borescope holes).

For all of the various components of the gas turbine engine 10 to be washed by the washing system 80 during shut down, the gas turbine engine 10 may be rotated by the electric machine 84 while the wash line(s) 82 pump cleaning fluid (e.g., heated detergent) into the engine. The electric machine 84 may be drivingly couplable with the accessory gearbox 45 to rotate the gas turbine engine 10 as desired during cleaning. The electric machine 84 may be capable of driving the accessory gearbox 45, the transfer gearbox 46, the transfer shaft 47, LP spool 36, and/or the HP spool 34. For example, a driving shaft 86 of the electric machine 84 may be couplable with the accessory gearbox 45.

In other embodiments, instead of an electric machine, a hybrid/electric motor such as a hybrid pneumatic electric starter or a hydraulic machine may be couplable with the accessory gearbox. In other embodiments, the gas turbine engine 10 may be rotated without the use of an electric machine during the wash event. For example, an air blower or suction pump may be utilized for driving the gas turbine engine 10. As a result, the gearboxes 45, 46 may also be driven.

As will be appreciated, because the gas turbine engine is offline during cleaning (e.g., foam wash), the lubrication system 100 may not actively circulate lubrication to the accessory gearbox 45 and the transfer gearbox 46 as in traditional operation. For example, during normal operation, one or more supply pumps and one or more return pumps, which are drivingly connected to the accessory gearbox 45 (and/or the transfer gearbox 46), may circulate lubricant throughout the lubrication system 100 that is fluidly connected to the gearboxes 45, 46 (as indicated by arrows in FIG. 1). However, during the wash event, the supply pumps and/or return pumps may be operated at a slower speed than traditional operation, such that lubricant does not circulate at the same rate or in the same amount as it would during normal operation to the accessory gearbox 45 and/or the transfer gearbox 46. That is, because the gearboxes are driven at a lower speed during the wash event (which can last several hours) to drive the shaft(s) of the gas turbine engine 10 at a slow speed, thus driving the oil supply/return pumps at a slow speed, wear or gear scuffing can result in the gearboxes due to insufficient lubricant being provided. However, because the accessory gearbox 45 and the transfer gearbox 46 are still driven by the electric machine 84 in order to turn the gas turbine engine during cleaning, this can result in gear scuffing and wear of the various components (e.g., gears, bevel gears, etc.) in the accessory gearbox 45 and/or the transfer gearbox 46.

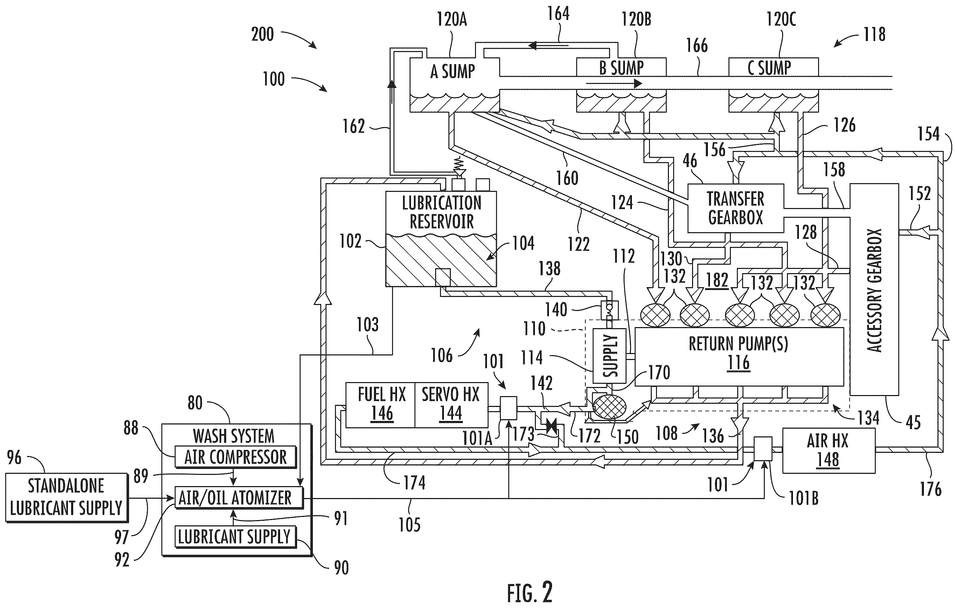

In exemplary embodiments, as discussed below in more detail, the wash system 80 may include an air compressor 88, a wash system lubricant supply 90, and an air/oil atomizer 92. In many embodiments, the air/oil atomizer is fluidly couplable or connectable with a wash system connector 101 of the lubrication system 100 to provide a mixture of air and oil to the accessory gearbox 45 and the transfer gearbox 46 during a wash event of the gas turbine engine 10. In other embodiments (not illustrated), the air/oil atomizer 92 may be integral with the wash system connector 101, such that the air supply and oil supply are connected directly to the wash system connector 101. The air/oil atomizer 92 may be fluidly coupled with a lubricant supply (e.g., an oil supply) and an air supply. For example, the air/oil atomizer 92 may be fluidly couplable with the lubricant reservoir 102 (FIG. 2) of the lubricant system 100, a wash system lubricant supply 90, or a standalone lubricant supply 96 to receive a flow of liquid lubricant. Additionally, the air/oil atomizer 92 may be fluidly couplable with an air supply, such as an air compressor of the wash system 80 to provide a flow of pressurized air to the air/oil atomizer 92 that is capable of atomizing the lubricant prior to injection into the lubrication system 100 during the wash.

Referring now to FIG. 2, a schematic diagram of a system 200 for reducing or preventing wear during a wash cycle of a gas turbine engine is provided. The system includes a lubrication system 100 that provides lubricant to the accessory gearbox 45 and/or the transfer gearbox 46 during washing of a gas turbine engine. The lubrication system 100 advantageously provides an improved structure that provides and/or circulates sufficient lubricant to the accessory gearbox 45 and/or the transfer gearbox 46 during the washing of the gas turbine engine (e.g., via the wash system 80 described above with reference to FIG. 1), thereby preventing or reducing scuffing and/or wear of the accessory gearbox 45 and/or the transfer gearbox 46.

As shown, the system 200 includes the accessory gearbox 45 and the transfer gearbox 46, which may be drivingly coupled to the accessory gearbox 45. For example, the transfer gearbox 46 may be drivingly coupled to the accessory gearbox 45 (as shown and described above with reference to FIG. 1). The lubrication system 100 is fluidly coupled to both the accessory gearbox 45 and the transfer gearbox 46, in order to provide lubricant to the accessory gearbox 45 and the transfer gearbox 46 during operation of the gas turbine engine and/or during a wash event of the gas turbine engine.

The lubrication system 100 may include a lubricant reservoir 102, which may be a tank or container that holds and supplies lubricant 104 (e.g., oil) for circulation through the lubrication system 100, the accessory gearbox 45, and the transfer gearbox 46. Additionally, the lubrication system 100 includes a supply circuit 106 and a return circuit 108, which each include one or more fluid carrying conduits that supply and return lubricant 104 to the various components in the lubrication system 100, the accessory gearbox 45, and the transfer gearbox 46. Specifically, the supply circuit 106 may supply and provide lubricant 104 from the lubricant reservoir 102 to the accessory gearbox 45 and the transfer gearbox 46. The return circuit 108 may return lubricant 104 from the accessory gearbox 45 and the transfer gearbox 46 to the lubricant reservoir 102.

In some embodiments, the lubrication system 100 may include a lube and scavenge system 110 fluidly connected to the supply circuit 106 and the return circuit 108. The lube and scavenge system 110 may include a pump shaft 112 drivingly connected to the accessory gearbox 45, such that rotation of the pump shaft 112 rotates the components (e.g., gears and/or accessories) connected to the accessory gearbox 45, thereby also rotating the components of the transfer gearbox 46 via the transfer shaft 47, thereby also rotating the one or more shafts of a gas turbine engine (which is connected to the transfer gearbox 46 as shown and described above with reference to FIG. 1).

The lube and scavenge system 110 may further include a supply pump 114 and one or more return pump(s) 116. The supply pump 114 is fluidly coupled to the supply circuit 106 and drivingly coupled to the pump shaft 112. The supply pump 114 may motivate lubricant 104 to circulate through the lubrication system 100 (specifically through the supply circuit 106). The one or more return pump(s) 116 may each be fluidly coupled to the return circuit 108 and drivingly coupled to the pump shaft 112. The one or more return pump(s) 116 may motivate lubricant 104 to circulate through the lubrication system 100 (specifically through the return circuit 108). The pump shaft 112 may drivingly couple both the supply pump 114 and the one or more return pump(s) 116.

In various embodiments, the lubrication system 100 may further include a sump system 118 having one or more sumps 120A, 120B, 120C fluidly connected to at least one of the supply circuit 106 and the return circuit 108. The sump system 118 can be a bearing sump region for lubricating engine bearings, in one non-limiting example. A first sump 120A, a second sump 120B, and a third sump 120C can be included in the sump system 118. Each sump 120A, 120B, 120C may be a reservoir or container that collects used lubricant 104 (e.g., used oil) from one or more engine bearings of a gas turbine engine (such as the gas turbine engine 10 described above with reference to FIG. 1). In other words, each sump 120A, 120B, 120C may be fluidly connected to an engine bearing of a gas turbine engine. While three sumps are illustrated, any number of sumps is contemplated. In one example, a valve can control provision of lubricant 104 to any one of the sumps.

The return circuit 108 may include one or more return lines 122, 124, 126, 128, 130 extending to the lube and scavenge system 110 and a main return line 136 extending from the lube and scavenge system 110 to the lubrication reservoir 102. Specifically, a first sump return line 122 may extend from the first sump 120A to the lube and scavenge system 110 (e.g., to the one or more return pump(s) 116 of the lube and scavenge system 110) to provide used lubricant from the first sump 120A to the lube and scavenge system 110. A second sump return line 124 may extend from the second sump 120B to the lube and scavenge system 110 (e.g., to the one or more return pump(s) 116 of the lube and scavenge system 110) to provide used lubricant from the second sump 120B to the lube and scavenge system 110. A third sump return line 126 may extend from the third sump 120C to the lube and scavenge system 110 (e.g., to the one or more return pump(s) 116 of the lube and scavenge system 110) to provide used lubricant from the third sump 120C to the lube and scavenge system 110.

Additionally, an accessory gearbox return line 128 may extend from the accessory gearbox 45 to the lube and scavenge system 110 (e.g., to the one or more return pump(s) 116 of the lube and scavenge system 110) to provide used lubricant from the accessory gearbox 45 to the lube and scavenge system 110. Similarly, a transfer gearbox return line 130 may extend from the transfer gearbox 46 to the lube and scavenge system 110 (e.g., to the one or more return pump(s) 116 of the lube and scavenge system 110) to provide used lubricant from the transfer gearbox 46 to the lube and scavenge system 110.

In various embodiments, an inlet filter 132 may be disposed in fluid communication on each of the one or more return lines 122, 124, 126, 128, 130 immediately upstream of the one or more return pump(s) 116. The inlet filters 132 may filter the used lubricant within each of the one or more return lines 122, 124, 126, 128, 130 prior to entrance into the one or more return pump(s) 116. For example, the inlet filters 132 may remove contaminants and/or particles from the used lubricant flowing through the one or more return lines 122, 124, 126, 128, 130 that could otherwise cause damage to the components of the system 100.

In exemplary embodiments, the lube and scavenge system 110 may include a scavenge manifold 134 fluidly coupled, and extending from, the one or more return pump(s) 116. The scavenge manifold 134 may collect all the lubricant from each pump of the one or more return pump(s) 116. The return circuit 108 may further include a main return line 136 extending from the lube and scavenge system 110 to the oil reservoir 102. Specifically, the main return line 136 may extend from the scavenge manifold 134 to the lubricant reservoir 102 (e.g., to a top of the lubricant reservoir).

The supply circuit 106 may provide clean (e.g., filtered) lubricant to the lube and scavenge system 110, the accessory gearbox 45, and the transfer gearbox 46. The supply circuit 106 may include an inlet supply line 138 fluidly coupling the lubrication reservoir 102 and the lube and scavenge system 110. Specifically, the inlet supply line 138 may extend from the lubrication reservoir 102 to the lube and scavenge system 110. Specifically, the inlet supply line may extend from the lubrication reservoir 102 to the supply pump 114 of the lube and scavenge system 110.

The supply circuit 106 may further include an outlet supply line 142 extending from the lube and scavenge system 110 to the accessory gearbox 45 and the transfer gearbox 46. Specifically, the outlet supply line 142 may extend from the supply pump 114 to the accessory gearbox 45 and the transfer gearbox 46.

In many embodiments, the system 100 may further include one or more heat exchangers 144, 146, 148 disposed in thermal communication on the outlet supply line 142. Specifically, the one or more heat exchangers may include a servo heat exchanger 144, a fuel heat exchanger 146, and an air heat exchanger 148. During normal operation of a gas turbine engine, the servo heat exchanger 144 may transfer heat between the lubricant 104 within the outlet supply line 142 and one or more servo motors associated with the system 100 and/or the gas turbine engine (such as the gas turbine engine 10 described above with reference to FIG. 1). Additionally, during normal operation of a gas turbine engine, the fuel heat exchanger 146 may transfer heat between the lubricant 104 within the outlet supply line 142 and fuel supplied to the gas turbine engine, e.g., from a fuel supply system coupled to a combustion section of the gas turbine engine (such as the gas turbine engine 10 described above with reference to FIG. 1). Further, during normal operation of a gas turbine engine, the air heat exchanger 148 may transfer heat between the lubricant 104 within the outlet supply line 142 and air supplied to the gas turbine engine, e.g., air from the fan section and/or the compressor section of the gas turbine engine (such as the gas turbine engine 10 described above with reference to FIG. 1).

In some embodiments, a supply-side filter 150 may be disposed in fluid communication on the outlet supply line 142. The supply side filter 150 may be disposed immediately downstream of the supply pump 114. The supply-side filter 150 may remove contaminants and/or particles from the lubricant being supplied to the accessory gearbox 45 and/or the transfer gearbox 46 via the outlet supply line. As illustrated, a filter bypass may be included on the outlet supply line 142, which allows for selective bypass of the supply-side filter.

In various embodiments, an anti-leak valve (or non-return valve) 140 may be fluidly connected to the lube and scavenge system 110 and disposed on the inlet supply line 138. The anti-leak valve 140 may be a mechanically loaded one-way valve that prevents lubricant 104 from the lubrication reservoir 102 from draining into the lube and scavenge system 110, the accessory gearbox 45, and/or the transfer gearbox 46.

The lubrication system 100 may further include a vent circuit for venting gases (e.g., air and/or other gases) from the lubricant system 100 (e.g., to the atmosphere). The vent circuit may include an accessory duct 158 extending from the accessory gearbox 45 to the transfer gearbox 46 for venting excess gases from the accessory gearbox 45. A transfer duct 160 may extend from the transfer gearbox to the sump system 118 (e.g., to the first sump 120A in the sump system 118) for venting or removing excess gases from the transfer gearbox 46. A reservoir vent 162 may extend from the lubrication reservoir 102 to the first sump 120A for venting or removing excess gases from the lubrication reservoir 102. An overflow duct 164 may extend from the second sump 120B to the first sump 120A for venting excess gases from the second sump 120B to the first sump 120A. A main duct 166 may extend from the first sump 120A, through the second sump 120B and the third sump 120C, to an outlet, which may exhaust the gases (e.g., to the atmosphere). The main duct 166 may be positioned within the LP shaft of a gas turbine engine (such as the LP shaft 36 described above with reference to FIG. 1).

In exemplary embodiments, still referring to FIG. 2, the system 200 may further include a wash system 80, which may be utilized and configured for washing, rinsing, or otherwise cleaning a gas turbine engine (such as the gas turbine engine described above with reference to FIG. 1). The wash system 80 may be housed at least in part on or within a modular and movable wash cart, which provides mobility of the wash system 80 and facilitates quick and easy cleaning of the gas turbine engine. The wash system 80 may include one or more wash line(s), which may expel cleaning fluid onto one or more components of the gas turbine engine during shut down.

As will be appreciated, because the gas turbine engine is offline during cleaning (e.g., foam wash), the lubrication system 100 may not actively circulate lubrication to the accessory gearbox 45 and the transfer gearbox 46 as in traditional operation. However, because the accessory gearbox 45 and the transfer gearbox 46 are driven (e.g., by an electric machine or by another means such as an electric starter, hybrid/electric starter, hybrid pneumatic/electric starter) in order to turn the gas turbine engine during cleaning, this can result in gear scuffing and wear of the various components (e.g., gears, bevel gears, etc.) in the accessory gearbox 45 and/or the transfer gearbox 46.

In exemplary embodiments, the wash system 80 may include an air compressor 88, a wash system lubricant supply 90, and an air/oil atomizer 92. The air compressor 88 may pressurize air (e.g., with a compressor), which may be stored in a tank and distributed via one or more compressor lines 89 to the air/oil atomizer 92. A wash system connector 101 is couplable to the wash system 80 and fluidly coupled to the supply circuit 106 upstream of the accessory gearbox 45 and the transfer gearbox 46. The wash system connector 101 is configured to supply a mixture of air and lubricant from the wash system 80 to the accessory gearbox 45 and the transfer gearbox 46. That is, in some embodiments, the air/oil atomizer 92 may be fluidly couplable or connectable with a wash system connector 101 (e.g., directly or via a connector line 105) of the lubrication system 100 to provide the mixture of air and lubricant to the accessory gearbox 45 and the transfer gearbox 46 via the supply circuit 106 during a wash of the gas turbine engine 10. The air/oil atomizer 92 may be fluidly coupled with a lubricant supply (e.g., an oil supply) and an air supply. For example, the air/oil atomizer 92 may be fluidly couplable with the lubricant reservoir 102 (e.g., via a reservoir supply line 103) of the lubricant system 100, a wash system lubricant supply 90 (e.g., via a wash lubricant supply line 91), or a standalone lubricant supply 96 (e.g., via a standalone lubricant supply line 97) to receive a flow of liquid lubricant. Additionally, the air/oil atomizer may be fluidly couplable with an air supply, such as the air compressor 88 of the wash system 80 (e.g., via one or more compressor lines 89) to provide a flow of pressurized air to the air/oil atomizer 92 that is capable of atomizing the lubricant prior to injection into the lubrication system 100 during the wash.

In some embodiments, the air/oil atomizer 92 may be integral with the wash system connector 101 (e.g., as a single unitary component), such that the wash system connector 101 is configured to connect to directly to a lubricant supply (e.g., the lubrication reservoir 102, the standalone lubricant supply 96, and/or the wash system lubricant supply) and an air supply (e.g., the air compressor 88) and provide, over a wash period, an atomized mixture of lubricant and air to the supply circuit 106 of the lubrication system upstream of the accessory gearbox 45 and the transfer gearbox 46.

In exemplary embodiments, the wash system connector 101 may be fluidly coupled to the supply circuit 106 upstream of the accessory gearbox 45 and the transfer gearbox 46 with respect to the flow of lubricant 104 through the supply circuit 106. The wash system connector 101 may be disposed in one or more locations along the supply circuit 106. For example, the lubrication system 100 may include a first wash system connector 101A and a second wash system connector 101B each fluidly coupled to the supply circuit 106 upstream of the accessory gearbox 45 and the transfer gearbox 46 with respect to the flow of lubricant 104 through the supply circuit 106.

In exemplary embodiments, the wash system connector 101 may be disposed on (and in selective fluid communication with) the outlet supply line 142 upstream of the accessory gearbox 45 and the transfer gearbox 46. The outlet supply line 142 may include several portions extending between various components fluidly and/or thermally connected to the outlet supply line 142. For example, a first portion 170 of the outlet supply line 142 may extend from the supply pump 114 to the supply-side filter 150. A second portion 172 of the outlet supply line 142 may extend from the supply-side filter 150 to the servo heat exchanger 144 and the fuel heat exchanger 146. A third portion 174 of the outlet supply line 142 may extend from the servo heat exchanger 144 and the fuel heat exchanger 146 to the air heat exchanger 148. A heat exchanger bypass line 173 may extend between the second portion 172 and the third portion 174 for selectively bypassing the heat exchangers 144, 146 (e.g., via one or more actuatable valves). A fourth portion 176 of the outlet supply line 142 may extend from the air heat exchanger 148 to the accessory gearbox 45 and the transfer gearbox 46. In many embodiments, outlet supply line 142 may include a first branch 152 extending to the accessory gearbox 45 and a second branch 154 extending to the transfer gearbox 46. Additionally, the outlet supply line 142 may include an overflow branch 156 that connects to each sump 120A, 120B, 120C in the sump system 118 to prevent lubricant overfill of the accessory gearbox 45 and/or the transfer gearbox 46. The overflow branch 156 may extend from the second branch 154 to each of the sumps 120A, 120B, 120C.

In some embodiments, the wash system connector 101 may be disposed downstream of the lube and scavenge system 110 and in selective fluid communication with the outlet line 142. For example, the wash system connector 101 may be disposed downstream of the lube and scavenge system 110 and upstream of the one or more heat exchangers 144, 146, 148. For example, the wash system connector 101 (specifically the first wash system connector 101A) may be disposed immediately upstream of the heat exchangers 144, 146 and immediately downstream of the heat exchanger bypass line 173 with respect to the flow of lubricant through the second portion 172 of the outlet supply line 142. In other words, the wash system connector 101 (specifically the first wash system connector 101A) may be disposed in fluid communication on the second portion 172 of the outlet supply line 142 immediately downstream of the heat exchanger bypass line 173 and immediately upstream of the heat exchangers 144, 146.

Additionally, or alternatively, the wash system connector 101 may be disposed on the outlet supply line 142 downstream the heat exchangers 144, 146. For example, the wash system connector 101 (specifically the second wash system connector 101B) may be disposed on the outlet supply line 142 downstream of the servo heat exchanger 144, the fuel heat exchanger 146, and the heat exchanger bypass line 173 and upstream (e.g., immediately) of the air heat exchanger 148 with respect to the flow of lubricant through the outlet supply line 142. In other words, the wash system connector 101 (specifically the second wash system connector 101B) may be disposed on the third portion 174 of the outlet supply line 142 immediately upstream of the air heat exchanger 148 with respect to the flow of lubricant through the outlet supply line 142. As shown, a valve may be disposed (in fluid communication) on the heat exchanger bypass line 173, which is selectively actuatable between an open position that allows lubricant to flow through the heat exchanger bypass line 173 and a closed position that prevents or restricts lubricant from flowing through the heat exchanger bypass line 173.

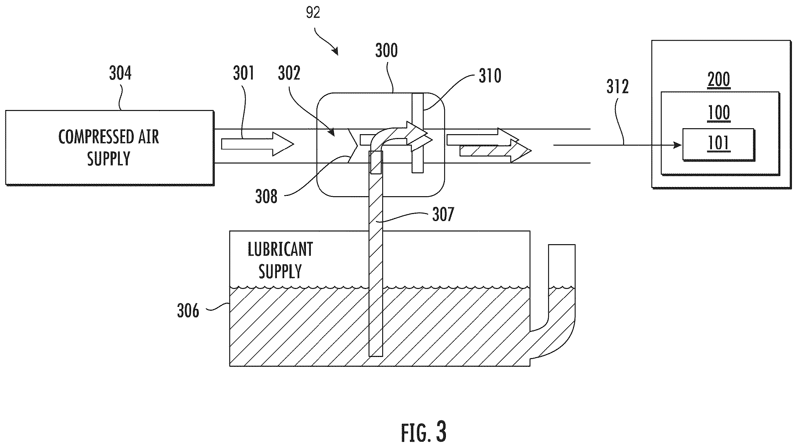

Referring now to FIG. 3, a cross-sectional view of an embodiment of an air/oil atomizer 92 is illustrated in accordance with exemplary aspects of the present disclosure. As shown, the air/oil atomizer 92 may include a mist generator 300 that defines a main passage 302. The main passage 302 may be fluidly connected to a compressed air supply 304 (e.g., via one or more conduits) for providing compressed air 301, such as the air compressor 88 of the wash system 80 described above with reference to FIGS. 1 and 2. Additionally, the main passage 302 may be in fluid communication with a lubricant supply 306 (e.g., via one or more conduits) for providing a lubricant 307 (e.g., oil), such as the lubricant reservoir 102, the wash system lubricant supply 90, and/or the standalone lubricant supply 96 described above with reference to FIGS. 1 and 2. The mist generator 300 may include a venturi nozzle 308 and a baffle plate 310 disposed within the main passage 302. The venturi nozzle 308 may be disposed upstream of the baffle plate 310 with respect to the flow of compressed air 301 through the main passage 302. The baffle plate 310 may extend across the main passage 302 and may define a plurality of atomizing apertures. The compressed air 301 and the lubricant 307 may pass through the plurality of atomizing apertures to generate a mixture of air and lubricant 312, which may be provided to the system 200 via a wash system connector 101 of the lubrication system 100 (as described above with reference to FIGS. 1 and 2).

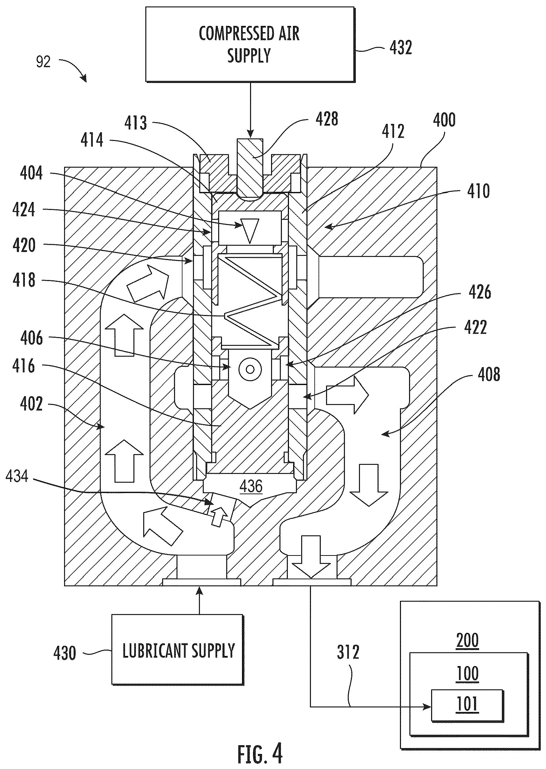

Referring now to FIG. 4, a cross-sectional view of an air/oil atomizer 92 is illustrated in accordance with exemplary aspects of the present disclosure. As shown in FIG. 4, the air/oil atomizer 92 may include a main body 400 defining a lubricant inlet passage 402, an air inlet passage 404, a mixing passage 406, and an atomized lubricant passage 408. The lubricant inlet passage 402 may be in fluid communication with a lubricant supply 430, and the air inlet passage 404 may be in fluid communication with a compressed air supply 432 (e.g., via a compressed air conduit 428). Additionally, a connection mechanism 410 may be disposed in the air inlet passage 404 and/or the mixing passage 406. The connection mechanism 410 may include a mounting bracket 412 coupled to the main body 400 and disposed within the air inlet passage 404 and the mixing passage 406, a compressor connector 413 coupled to the mounting bracket 412, a first compression member 414 slidably coupled to the mounting bracket 412 and disposed in the air inlet passage 404, a second compression member 416 slidably coupled to the mounting bracket 412 and disposed within the mixing passage 406. The compressor connector 413 may be coupled to both the mounting bracket 412 and the first compression member 414. Additionally, a biasing element 418 (e.g., a mechanical spring) may extend between the first compression member 414 and the second compression member 416. That is, the biasing element 418 may be disposed between the first compression member 414 and the second compression member 416. The first compression member 414 and the second compression member 416 are movable (or slidable) to a position in which the mixture of air and lubricant 312 is generated.

The mounting bracket 412 may be coupled to the main body 400 and positioned within the air inlet passage 404 and the mixing passage 406, such that the mounting bracket 412 does not move relative to the main body 400. The mounting bracket 412 may define an oil aperture 420 that fluidly connects the lubricant inlet passage 402 and the air inlet passage 404. Additionally, the mounting bracket 412 may define an outlet aperture 422 that fluidly couples the mixing passage 406 and the atomized lubricant passage 408.

The first compression member 414 may define an orifice 424, and the second compression member 416 may define an atomizing orifice 426. The first compression member 414 and the second compression member 416 may be movable (or slidable along the mounting bracket 412) between a first position in which the biasing element 418 is not compressed and a second position in which the biasing element 418 is compressed (e.g., upon connection of an air compressor conduit 428 to the compressor connector 413). In the first position, the first compression member 414 extends across and blocks the oil aperture 420 and the second compression member 416 extends across and blocks the outlet aperture 422. In the second position, e.g., when the air compressor conduit 428 is connected to the compressor connector 413, thereby compressing the biasing element 418, the orifice 424 of the first compression member 414 aligns with the oil aperture 420 which allows for oil and air to flow into the mixing passage 406. Additionally, in the second position, the atomizing orifice 426 aligns with the outlet aperture 422, thereby allowing for an atomized mixture of lubricant and air to flow into the atomized lubricant passage 408. That is, the mixing passage 406 and the atomizing orifice 426 may generate the mixture of air and lubricant 312, which may be provided to the system 200 via a wash system connector 101 of the lubrication system 100 (as described above with reference to FIGS. 1 and 2). In some embodiments, the main body 400 may define a balance port 434 and a balance plenum 436. The balance port 434 may extend between, and fluidly couple, the inlet passage 402 and the balance plenum 436. The balance port 434 and balance plenum 436 may advantageously provide for pressure equalization, force reduction, and/or flow stability.

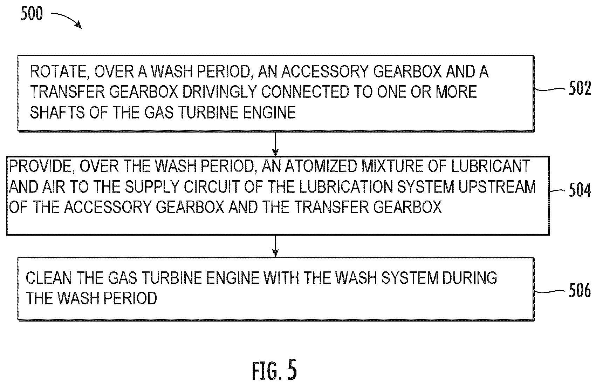

Referring now to FIG. 5, a flow diagram of a method 500 for reducing or preventing wear (e.g., in one or more gearboxes) during a wash event of a gas turbine engine with a wash system is illustrated in accordance with embodiments of the present subject matter. In general, the method 500 will be described herein with reference to the gas turbine engine 10, the wash system 80, the system 200, the lubrication system 100, and the air/oil atomizers described above with reference to FIGS. 1 through 4. However, it will be appreciated by those of ordinary skill in the art that the disclosed method 500 may generally be utilized with any other suitable system configuration. In addition, although FIG. 5 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown, the method 500 may include, at (502), rotating, over a wash period, an accessory gearbox and a transfer gearbox drivingly connected to one or more shafts of the gas turbine engine (e.g., with an electric machine). Alternatively, or additionally, an electric starter, hybrid/electric starter, hybrid pneumatic/electric starter, or other means may be utilized for rotating the gearboxes, thereby rotating the one or more shafts of the gas turbine engine during the wash. For example, the electric machine 84 of FIG. 1 can be used to rotate the accessory gearbox 45 and the transfer gearbox 46, thereby rotating the one or more shafts of the gas turbine engine 10.

In various implementations, the wash period may be between about 0.5 hour and about 5 hours (or such as between about 0.5 hour and about 3 hours). The accessory gearbox and the transfer gearbox are fluidly connected to a supply circuit of a lubrication system. For example, during the wash of the gas turbine engine, the accessory gearbox and the transfer gearbox may be driven (e.g., with an electric machine or by another means such as an electric starter, hybrid/electric starter, hybrid pneumatic/electric starter), thereby rotating one or more shafts of the gas turbine engine (e.g., the LP shaft and/or the HP shaft). In many embodiments, rotating at (502) may include rotating, over the wash period, the one or more shafts of the gas turbine engine at between about 10 revolutions per minute (RPM) and about 400 RPM (or such as between about 50 RPM and about 200 RPM, or such as between about 100 RPM and about 150 RPM) for the duration of the wash period. For example, the one or more shafts may be rotated with the electric machine drivingly connected to an accessory gearbox and a transfer gearbox or by another means such as an electric starter, hybrid/electric starter, hybrid pneumatic/electric starter. As a result, components (e.g., gears) of the accessory gearbox and the transfer gearbox rotate along with the one or more shafts.

In many implementations, the method 500 may include, at (504) providing, over the wash period, an atomized mixture of lubricant and air to the supply circuit of the lubrication system upstream of the accessory gearbox and the transfer gearbox. In some embodiments, the atomized mixture of lubricant and air may be generated with the air/oil atomizer 92 described above with reference to FIGS. 3 and 4. Additionally, the atomized mixture of lubricant and air may be provided to the supply circuit of the lubrication system via one or the wash system connectors 101 disposed in fluid communication on the lubrication system 100 as shown in FIG. 2 and described above This may advantageously provide additional oil to the accessory gearbox and the transfer gearbox during the wash event, which prevents wear of the gears and other components in the gearboxes during the wash. For example, in various implementations, providing at (504) may include fluidly connecting the air/oil atomizer of the wash system to a wash system connector of the lubrication system to the supply circuit upstream of the accessory gearbox and the transfer gearbox.

In exemplary embodiments, the method 500 may further include, at (506), cleaning the gas turbine engine with the wash system during the wash period. The wash system may include one or more wash line(s) 82 as shown in FIG. 1, which may expel cleaning fluid onto one or more components of the gas turbine engine 10 while the shaft(s) of the gas turbine engine 10 are rotated (e.g., by the electric machine 84). In many embodiments, cleaning at (506) may include expelling cleaning fluid onto one or more components of the gas turbine engine while the shaft of the gas turbine engine is rotated by the electric machine and the atomized mixture of lubricant and air is provided to the accessory gearbox and the transfer gearbox.

Further aspects are provided by the subject matter of the following clauses:

A system for reducing wear during a wash of a gas turbine engine, the system comprising: an accessory gearbox; a transfer gearbox drivingly and fluidly coupled to the accessory gearbox; and a lubrication system fluidly coupled to the accessory gearbox and the transfer gearbox, the lubrication system comprising: a lubricant reservoir; a supply circuit to supply lubricant from the lubricant reservoir to the accessory gearbox and the transfer gearbox; a return circuit to return lubricant from the accessory gearbox and the transfer gearbox to the lubricant reservoir; and a wash system connector couplable to a wash system and fluidly coupled to the supply circuit upstream of the accessory gearbox and the transfer gearbox, the wash system connector configured to supply a mixture of air and lubricant from the wash system to the accessory gearbox and the transfer gearbox.

The system as in any preceding clause, wherein the wash system comprises an air/oil atomizer fluidly couplable with the wash system connector of the lubrication system to provide the mixture of air and lubricant to the accessory gearbox and the transfer gearbox via the supply circuit during the wash of the gas turbine engine.

The system as in any preceding clause, wherein the air/oil atomizer includes a mist generator that defines a main passage in fluid communication with a compressed air supply and a lubricant supply, wherein a venturi nozzle and a baffle plate are disposed within the main passage, and wherein the venturi nozzle and the baffle plate generate the mixture of air and lubricant.

The system as in any preceding clause, wherein the air/oil atomizer comprises: a main body defining a lubricant inlet passage, an air inlet passage, a mixing passage, and an atomized lubricant passage; a mounting bracket coupled to the main body and disposed within the air inlet passage and the mixing passage; a first compression member slidably coupled to the mounting bracket; a second compression member slidably coupled to the mounting bracket; and a biasing element disposed between the first compression member and the second compression member, wherein the first compression member and the second compression member are movable to a position in which the mixture of air and lubricant is generated.

The system as in any preceding clause, wherein the wash system comprises an air compressor fluidly couplable with the air/oil atomizer.

The system as in any preceding clause, wherein the air/oil atomizer is fluidly couplable with a lubricant supply.

The system as in any preceding clause, wherein the lubricant supply is at least one of the lubricant reservoir of the lubrication system, a standalone lubricant supply, or a wash system lubricant supply.

The system as in any preceding clause, wherein the lubrication system further includes a lube and scavenge system fluidly connected to the supply circuit and the return circuit, and wherein the wash system connector is disposed downstream of the lube and scavenge system.

The system as in any preceding clause, wherein the supply circuit comprises: an inlet supply line extending from the lubrication reservoir to the lube and scavenge system; and an outlet supply line extending from the lube and scavenge system to the accessory gearbox and the transfer gearbox, wherein the wash system connector is disposed on the outlet supply line.

The system as in any preceding clause, further comprising one or more heat exchangers disposed in thermal communication on the outlet supply line.

The system as in any preceding clause, wherein the wash system connector is disposed on the outlet supply line upstream of the one or more heat exchangers.

The system as in any preceding clause, wherein the one or more heat exchangers include a servo heat exchanger, a fuel heat exchanger, and an air heat exchanger, and wherein the wash system connector is disposed on the outlet supply line downstream of the servo heat exchanger and the fuel heat exchanger and upstream of the air heat exchanger.

The system as in any preceding clause, wherein the return circuit comprises: an accessory gearbox return line extending from the accessory gearbox to the lube and scavenge system; a transfer gearbox return line extending from the transfer gearbox to the lube and scavenge system; and a main return line extending from the lube and scavenge system to the lubricant reservoir.

The system as in any preceding clause, wherein the lube and scavenge system comprises: a pump shaft drivingly connected to the accessory gearbox; a supply pump fluidly coupled to the supply circuit and drivingly coupled to the pump shaft; and one or more return pumps fluidly coupled to the return circuit and drivingly coupled to the pump shaft.

The system as in any preceding clause, further comprising a sump system having one or more sumps fluidly connected to at least one of the supply circuit and the return circuit.

A method for reducing wear during a wash event of a gas turbine engine with a wash system, the method comprising: rotating, over a wash period, an accessory gearbox and a transfer gearbox drivingly connected to one or more shafts of the gas turbine engine, the accessory gearbox and the transfer gearbox fluidly connected to a supply circuit of a lubrication system; providing, over the wash period, an atomized mixture of lubricant and air to the supply circuit of the lubrication system upstream of the accessory gearbox and the transfer gearbox; and cleaning the gas turbine engine with the wash system during the wash period.

The method as in any preceding clause, wherein providing the atomized mixture of lubricant and air to the supply circuit comprises: fluidly connecting an air/oil atomizer of the wash system to a wash system connector of the lubrication system to the supply circuit upstream of the accessory gearbox and the transfer gearbox.

The method as in any preceding clause, wherein cleaning the gas turbine engine comprise expelling cleaning fluid onto one or more components of the gas turbine engine while the shaft of the gas turbine engine is rotated and the atomized mixture of lubricant and air is provided to the accessory gearbox and the transfer gearbox.

The method as in any preceding clause, wherein rotating the one or more shafts comprises: rotating, over the wash period, the one or more shafts of the gas turbine engine at between about 10 revolutions per minute (RPM) and about 400 RPM for a duration of the wash period.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system (200) for reducing wear during a wash of a gas turbine engine (10), the system comprising:
an accessory gearbox (45);
a transfer gearbox (46) drivingly and fluidly coupled to the accessory gearbox (45); and
a lubrication system (100) fluidly coupled to the accessory gearbox (45) and the transfer gearbox (46), the lubrication system (100) comprising:
a lubricant reservoir (102);
a supply circuit (106) to supply lubricant (104) from the lubricant reservoir (102) to the accessory gearbox (45) and the transfer gearbox (46);
a return circuit (108) to return lubricant (104) from the accessory gearbox (45) and the transfer gearbox (46) to the lubricant reservoir (102); and
a wash system connector (101) couplable to a wash system (80) and fluidly coupled to the supply circuit (106) upstream of the accessory gearbox (45) and the transfer gearbox (46), the wash system connector (101) configured to supply a mixture of air and lubricant from the wash system (80) to the accessory gearbox (45) and the transfer gearbox (46)).

2. The system (200) as in claim 1, wherein the wash system (80) comprises an air/oil atomizer (92) fluidly couplable with the wash system connector (101) of the lubrication system (100) to provide the mixture of air and lubricant to the accessory gearbox (45) and the transfer gearbox (46) via the supply circuit (106) during the wash of the gas turbine engine (10).

3. The system (200) as in claim 2, wherein the air/oil atomizer (92) includes a mist generator (300) that defines a main passage (302) in fluid communication with a compressed air supply (304) and a lubricant supply (306), wherein a venturi nozzle (308) and a baffle plate (310) are disposed within the main passage (302), and wherein the venturi nozzle (308) and the baffle plate (310) generate the mixture of air and lubricant.

4. The system (200) as in claim 2, wherein the air/oil atomizer (92) comprises:
a main body (400) defining a lubricant inlet passage (402), an air inlet passage (404), a mixing passage (406), and an atomized lubricant passage (408);
a mounting bracket (412) coupled to the main body (400) and disposed within the air inlet passage (404) and the mixing passage (406);
a first compression member (414) slidably coupled to the mounting bracket (412);
a second compression member (416) slidably coupled to the mounting bracket; and
a biasing element (418) disposed between the first compression member (414) and the second compression member (416), wherein the first compression member (414) and the second compression member (416) are movable to a position in which the mixture of air and lubricant is generated.

5. The system (200) as in claim 2, wherein the wash system (80) comprises an air compressor (88) fluidly couplable with the air/oil atomizer (92).

6. The system (200) as in claim 2, wherein the air/oil atomizer (92) is fluidly couplable with a lubricant supply.

7. The system (200) as in claim 6, wherein the lubricant supply is at least one of the lubricant reservoir (102) of the lubrication system (100), a standalone lubricant supply (96), or a wash system lubricant supply (90).

8. The system (200) as in claim any preceding claim, wherein the lubrication system (100) further incudes a lube and scavenge system (110) fluidly connected to the supply circuit (106) and the return circuit (108), and wherein the wash system (80) connector is disposed downstream of the lube and scavenge system (110).

9. The system (200) as in claim 8, wherein the supply circuit (106) comprises:
an inlet supply line (138) extending from the lubrication reservoir to the lube and scavenge system (110); and
an outlet supply line (142) extending from the lube and scavenge system (110) to the accessory gearbox (45) and the transfer gearbox (46), wherein the wash system (80) connector is disposed on the outlet supply line (142).

10. The system (200) as in claim 9, further comprising one or more heat exchangers disposed in thermal communication on the outlet supply line (142).

11. The system (200) as in claim 10, wherein the wash system (80) connector is disposed on the outlet supply line (142) upstream of the one or more heat exchangers.

12. The system (200) as in claim 10 or 11, wherein the one or more heat exchangers include a servo heat exchanger (144), a fuel heat exchanger (146), and an air heat exchanger (148), and wherein the wash system (80) connector is disposed on the outlet supply line (142) downstream of the servo heat exchanger (144) and the fuel heat exchanger (146) and upstream of the air heat exchanger (148).

13. A method for reducing wear during a wash event of a gas turbine engine (10) with a wash system (80), the method comprising:
rotating, over a wash period, an accessory gearbox (45) and a transfer gearbox (46) drivingly connected to one or more shafts of the gas turbine engine (10), the accessory gearbox (45) and the transfer gearbox (46) fluidly connected to a supply circuit (106) of a lubrication system (100);
providing, over the wash period, an atomized mixture of lubricant and air to the supply circuit (106) of the lubrication system (100) upstream of the accessory gearbox (45) and the transfer gearbox (46); and
cleaning the gas turbine engine (10) with the wash system (80) during the wash period.

14. The method as in claim 13, wherein providing the atomized mixture of lubricant and air to the supply circuit (106) comprises:
fluidly connecting an air/oil atomizer (92) of the wash system (80) to a wash system (80) connector of the lubrication system (100) to the supply circuit (106) upstream of the accessory gearbox (45) and the transfer gearbox (46).

15. The method as in claim 13 or 14, wherein cleaning the gas turbine engine (10) comprises expelling cleaning fluid onto one or more components of the gas turbine engine (10) while the shaft (86) of the gas turbine engine (10) is rotated and the atomized mixture of lubricant and air is provided to the accessory gearbox (45) and the transfer gearbox (46).
